Europäisches Patentamt

European Patent Office

Office européen des brevets

(11) Veröffentlichungsnummer: **0 292 874 B1**

## (12) EUROPÄISCHE PATENTSCHRIFT

(45) Veröffentlichungstag der Patentschrift: **22.04.92**

(21) Anmeldenummer: **88108034.5**

(22) Anmeldetag: **19.05.88**

(51) Int. Cl.⁵: **A01C 17/00**

---

(54) **Grossflächendüngerstreuer.**

---

(30) Priorität: **29.05.87 DE 3718145**
**23.10.87 DE 3735896**
**29.02.88 DE 3806439**

(43) Veröffentlichungstag der Anmeldung:
**30.11.88 Patentblatt 88/48**

(45) Bekanntmachung des Hinweises auf die
Patenterteilung:
**22.04.92 Patentblatt 92/17**

(84) Benannte Vertragsstaaten:
**DE FR GB NL**

(56) Entgegenhaltungen:
**EP-A- 0 158 335      EP-A- 0 240 734**
**EP-A- 0 312 679      DE-A- 1 457 867**
**DE-A- 3 438 711      FR-A- 2 450 551**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Dreyer, Heinz, Dipl-Ing. Univ. Dr. agr.
Am Amazonenwerk 7
W-4507 Hasbergen(DE)**

---

**Beschreibung**

Die Erfindung betrifft einen Großflächendüngerstreuer gemäß Oberbegriff des Anspruches 1.

Ein derartiger Großflächendüngerstreuer ist bereits durch die DE-OS 34 38 711 bekannt. Dieser Großflächendüngerstreuer weist einen langgestreckten Vorratsbehälter und ein in dem unteren Bereich des Vorratsbehälters angeordnetes Förderorgan auf, welches die sich im Vorratsbehälter befindlichen Düngemittel zu einem an dem hinteren Ende des Vorratsbehälters angeordneten Zentrifugalstreuwerk fördert. Dieses Zentrifugalstreuwerk weist zwei Schleuderscheiben auf. Die Antriebswellen für die beiden Schleuderscheiben sind auf einem gemeinsamen Getriebegehäuse angeordnet, wobei das Getriebegehäuse mit den beiden Schleuderscheiben um eine quer zur Fahrtrichtung verlaufende Achse verschwenkbar und in verschiedenen Positionen einstellbar angeordnet ist. Durch dieses Verschwenken des Zentrifugalstreuwerkes läßt sich die Streubreite verändern oder einstellen, sowie die Qualität des Streubildes verbessern, um so bei verschiedenen Düngemittelsorten jeweils ein gleichmäßiges Streubild über die gesamte Arbeitsbreite des Großflächendüngerstreuers zu erzielen. Damit der Aufgabepunkt der Düngermittelpartikel auf die jeweilige Schleuderscheibe in bezug auf das verstellbare Streuorgan unverändert bleibt und ein gleichmäßiges Streubild garantiert ist, sind Leitorgane vorgesehen, die mit dem Streuorgan gemeinsam an einem Rahmen angeordnet sind und eine Einheit bilden, so daß bei einem Verschwenken des Streuorgans keine Veränderung des Aufgabepunktes des auf die Schleuderscheiben auftreffenden Düngers herbeigeführt wird.

Diese Anpassung an die verschiedenen Streubreiten unter Berücksichtigung der spezifischen Streuguteigenschaften der verschiedenen auszustreuenden Düngemittelsorten, durch Verschwenken des gesamten Zentrifugalstreuwerkes, kann besonders bei großen Arbeitsbreiten Mängel hinsichtlich der Streubildqualität aufweisen. Die durch das Verschwenken des Streuwerkes möglichen Verstellmöglichkeiten desselben sind bei den vielfältigen Düngersorten in einigen Fällen nicht ausreichend genug, um die Düngemittel gleichmäßig über die jeweils gewünschte Arbeitsbreite zu verteilen, wobei diese Arbeitsbreiten insbesondere bei großen Arbeitsbreiten mit einigen Düngersorten nicht immer exakt erreicht werden.

Die FR-A- 24 50 551 zeigt einen Zentrifugaldüngerstreuer, welcher auf ein Fahrwerk aufgesetzt ist. Dieser Düngerstreuer weist einen doppeltrichterförmigen Behälter auf, unter dessen beiden Auslauftrichter Schleuderscheiben angeordnet sind. Auf diesen Schleuderscheiben sind in Scheibenebene winkelverschwenkbare Wurfschaufeln angeordnet, so daß die Wurfschaufeln mit unterschiedlichen Winkeln zur Radialen mittels im Bereich der Wurfschaufeln angeordneter Skalen einstellbar sind.

Der Erfindung liegt nun die Aufgabe zugrunde, den eingangs beschriebenen Großflächendüngerstreuer in einfacher Weise dahingehend mit sehr einfachen Mitteln weiterzubilden, um eine gleichmäßige Düngerverteilung der verschiedenen Dünger über die verschiedenen, in der Praxis geforderten Arbeitsbreiten erreichen zu können.

Diese Aufgabe wird in erfindungsgemäßer Weise durch die kennzeichnenden Merkmale des Anspruches 1 gelöst.

Infolge dieser Maßnahmen ist es auf einfachste Weise möglich, die Einstellung der Arbeitsbreite des Großflächendüngerstreuers unter Berücksichtigung der jeweiligen Streuguteigenschaften des auszustreuenden Materials ausschließlich über die Einstellung der Wurfschaufeln auf den Schleuderscheiben anhand einer Streutabelle vorzunehmen und ein Streubild guter Qualität über die gesamte Arbeitsbreite des Großflächendüngerstreuers, selbst bei großen Arbeitsbreiten von bis zu 24 m und mehr, zu erreichen. Es wird also erstmals möglich, auch mit einem Großflächendüngerstreuer die durchaus schon bei Anbauschleuderstreuern bekannten großen Arbeitsbreiten von bis zu 24 m und mehr bei guter Streubildqualität zu erreichen. Bei den Anbauschleuderstreuern ist es nur wesentlich einfacher, diese Arbeitsbreiten exakt einzustellen bzw. einzuhalten, da sich die Anbauhöhe des in dem Dreipunktkraftheber des den Schleudersteuer tragenden Schleppers befindlichen Streuers ebenfalls je nach Arbeitsbreite verändern läßt, was bei dem Streuwerk des Großflächendüngerstreuers bauartbedingt nicht möglich ist. Eine unverwechselbare Einstellung der in verschiedenen Positionen der auf den Schleuderscheiben eines Großflächendüngerstreuers befestigbaren Wurfschaufeln wird in bevorzugter Weise dadurch gewährleistet, daß zumindest zwei Wurfschaufeln auf jeder Schleuderscheibe angeordnet sind, daß sich für jede Wurfschaufel bei Einstellung des horizontalen Abwurfwinkels die Markierungselemente auf der Schleuderscheibe befinden, in welche unterschiedlich ausgebildete und/oder unterschiedlich bezeichnet sind und zwar derart, daß die Markierungspunkte eindeutig und unverwechselbar jeweils einer Wurfschaufel zugeordnet sind. Hierdurch ist es nun dem Benutzer des in erfindungsgemäßer Weise ausgerüsteten Großflächendüngerstreuers möglich, entsprechend den jeweiligen vorherrschenden Einsatzbedingungen, d.h., der gewünschten Arbeitsbreite und unter Berücksichtigung der Streuguteigenschaften des auszustreuenden Materials, eine exakte, den jeweils gewünschten Einsatzverhältnissen entsprechende Einstellung der auf den Schleuderscheiben angeordneten Wurfschaufeln anhand einer Streutabelle vorzunehmen, und eine gleichmäßige Verteilung der Düngemittel zu erreichen, sowie ein optimales Streubild zu erzeugen. Der Benutzer kann also die aus der Streutabelle entnommenen Einstelldaten nicht mehr vertauschen, d.h., einer falschen Wurfschaufel zuordnen, da dieser Einstellwert unverwechselbar nur auf einer Skala auftaucht und es nicht zu einem Übertragen des aus der Streutabelle entnommenen Wertes auf eine mit der anderen Wurfschaufel zusammenwirkenden Skala möglich ist.

Zur exakten Einstellung der in der Praxis geforderten Arbeitsbreiten mittels der winkelverschwenkbar auf den Schleuderscheiben angeordneten Wurfschaufeln unter Berücksichtigung der jeweiligen Streuguteigenschaften des auszubringenden Materials ist es von entscheidender Bedeutung, daß auf die jeder Schleuderscheibe angeordneten Wurfschaufeln eine unterschiedliche Länge aufweisen, hierbei ist dann weiterhin erfindungsgemäß vorgesehen, daß die Abstreukanten der Wurfschaufeln einen unterschiedlichen Abstand zur Drehachse der Schleuderscheiben aufweisen. Diese unterschiedlich langen Wurfschaufeln mit den sich in unterschiedlichem Abstand zur Drehachse der Schleuderscheiben befindlichen Abstreukanten der Wurfschaufeln gewährleisten eine gleichmäßige Düngerverteilung über den gesamten Streubereich des Großflächendüngerstreuers, egal, ob es sich um kleine oder große Arbeitsbreiten handelt. Die lange Wurfschaufel wirft die Düngerpartikel mehr in den Außenbereich der Arbeitsbreite, während die kurze Schaufel die Düngerpartikel in den inneren Bereich der Arbeitsbreite abwirft.

Damit sich nun ein und dieselbe Streuscheibe für verschiedene Arbeitsbreiten bei den unterschiedlichsten Düngersorten einsätzen läßt, ist erfindungsgemäß vorgesehen, daß auf jeder Schleuderscheibe zumindest zwei Wurfschaufeln angeordnet sind, welche mit unterschiedlichem Winkel zur Radialen eingestellt oder einstellbar sind.

Um die entsprechenden Arbeitsbreiten unter Berücksichtigung der jeweiligen Streuguteigenschaften der auszustreuenden Düngemittelpartikel präzise einstellen zu können, ist erfindungsgemäß weiterhin vorgesehen, daß auf den Schleuderscheiben eine Anzahl von Arretierungs- und/oder Einstellmarkierungen für die Wurfschaufeln vorgesehen sind.

Dadurch, daß für jede Wurfschaufel eigene Arretierungs- und/oder Einstellmarkierungen vorgesehen sind, erfolgt eine eindeutige Zuordnung der Markierungselemente zu jeder Wurfschaufel, so daß Verwechselungen überhaupt nicht mehr vorkommen können. Der Landwirt entnimmt seiner Streutabelle die jeweilige Einstellung für die Wurfschaufel und stellt sie in entsprechender Weise ein.

Damit nun die Düngemittel gleichmäßig, d.h., in einem Streubild guter Qualität, über den gesamten Streubereich, sowohl für kleine als auch für große Arbeitsbreiten von den Schleuderscheiben verteilt werden, kann jede Schleuderscheibe mehrere, vorzugsweise nur zwei Wurfschaufeln aufweisen, deren Anstellwinkel unterschiedlich oder deren Abstände aus Abstreukante zur Drehachse der Schleuderscheibe wesentlich unterschiedlich sind. Hierdurch wird jeweils gewährleistet, daß während des Streuvorganges sowohl der innere als auch der äußere Bereich der Arbeitsbreite der Schleuderscheiben gleichmäßig mit Düngemittelpartikeln versorgt wird.

Es ist erfindungsgemäß vorgesehen, daß die Wurfschaufeln auf der einen Seite durch einen Drehbolzen und an der anderen Seite durch einen Schraubbolzen gehalten sind, daß der Drehbolzen als Reibverschlußverbindung ausgebildet ist, daß der Schraubbolzen sich in einem Langloch bewegt, welches in der Schleuderscheibe angeordnet ist. Hierdurch ergibt sich eine sehr einfache Konstruktion zur Befestigung der winkelverschwenkbaren Wurfschaufeln, wobei ein Verschwenken der Wurfschaufeln nur durch geringes Lösen der Schraubbolzen herbeigeführt wird.

Um den Großflächendüngerstreuer auf einfachste Weise auf Normal- oder Spätdüngung einstellen zu können, ist erfindungsgemäß vorgesehen, daß an den Enden der Wurfschaufeln um waagerechte Achsen verschwenkbare Schwenkflügel, welche in zwei durch feste Kennzeichnungen und/oder Anschläge fixierbare Stellungen - zum Normal- und zum Spätdüngen - gebracht werden können, angebracht sind. Infolge dieser Maßnahmen kann der Großflächenstreuer erstmals mit einem Handgriff auf Spätdüngung und umgekehrt umgestellt werden, es brauchen nur die schwenkbaren Schwenkflügel in die entsprechende Position gebracht werden, d.h., daß sie für das Normaldüngen nach unten und für das Spätdüngen nach oben geschwenkt werden. Eine gleichzeitige Verschwenkung der Wurfschaufeln in Scheibenebene ist bei gleicher Düngersorte und gleicher Arbeitsbreite für die Umstellung von Normal- auf Spätdüngung nicht erforderlich.

Desweiteren kann vorgesehen sein, daß die Schleuderscheiben auswechselbar auf ihren Antriebswellen angeordnet sind, daß die Schleuderscheiben gegen Schleuderscheiben mit anders ausgebildeten - beispielsweise unterschiedlichen langen oder längeren oder kürzeren - und/oder angestellten Wurfschaufeln austauschbar sind. Hierdurch ist es in sehr einfacher Weise möglich, die Normalstreuscheiben, welche ein Streubild mit im Randbereich flach abfallender Streustärke erzielen, gegen sog. Grenzstreuscheiben, welche ein Streubild mit im Randbereich steil abfallender Streustärke erzielen, auszutauschen.

Weitere Einzelheiten der Erfindung sind der Beispielsbeschreibung und den Zeichnungen zu entnehmen. Hierbei zeigt

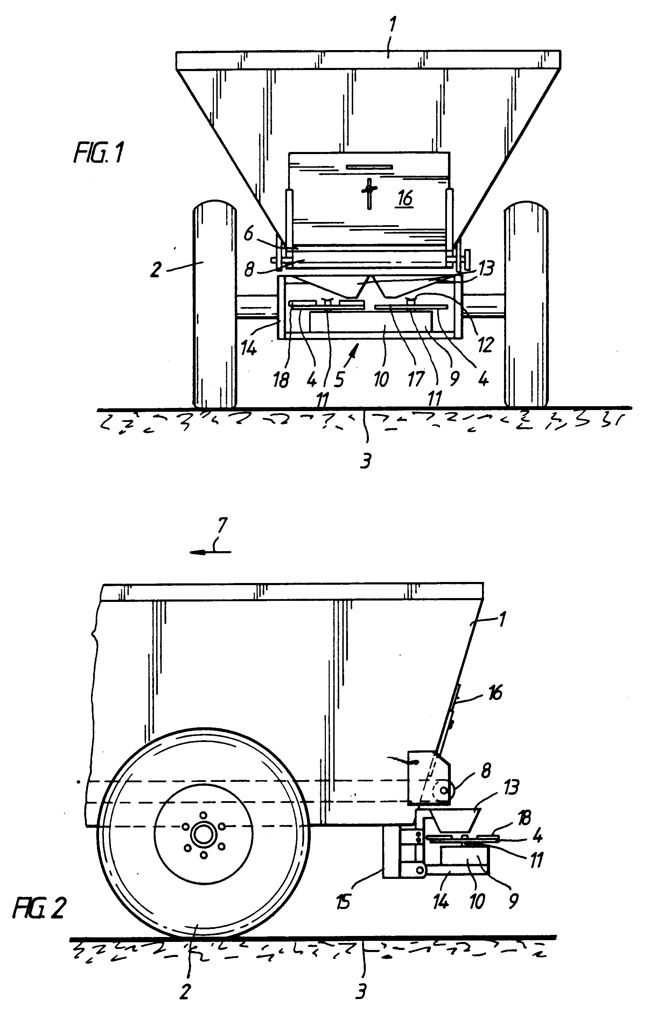

Fig. 1     den in erfindungsgemäßer Weise ausgebildeten Großflächendüngerstreuer in der Ansicht von hinten,

Fig. 2     den in erfindungsgemäßer Weise ausgebildeten Großflächendüngerstreuer in Teilansicht und in der Seitenansicht,

Fig. 3     die linke Schleuderscheibe mit den erfindungsgemäßen Wurfschaufeln für das "Normalstreuen" in der Draufsicht und vergrößertem Maßstab,

Fig. 4     die erfindungsgemäße rechte Schleuderscheibe,

Fig. 5     eine weitere in erfindungsgemäßer Weise ausgerüstete Schleuderscheibe mit im Vergleich zu den Fig. 3 und 4 längeren Wurfschaufeln für das "Breitstreuen",

Fig. 6     die erfindungsgemäße rechte Schleuderscheibe,

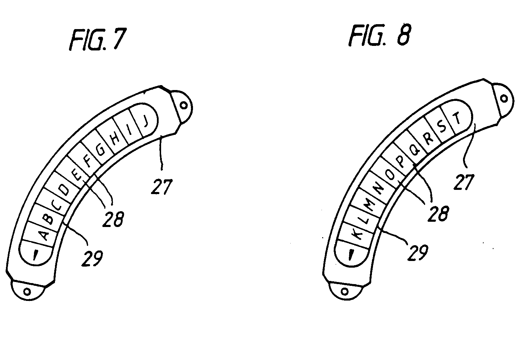

Fig. 7     die in erfindungsgemäßer Weise ausgebildete Einstellskala für die eine Wurfschaufel der Schleuderscheibe gemäß den vorhergehenden Fig. in der Draufsicht und vergrößertem Maßstab und

Fig. 8     die andere erfindungsgemäß ausgebildete Einstellskala für die andere Wurfschaufel der Schleuderscheibe gemäß den vorhergehenden Fig. in der Draufsicht und vergrößertem Maßstab.

Der Großflächendüngerstreuer besteht aus einem langgestreckten Vorratsbehälter 1, der sich über die Laufräder 2 auf den Boden 3 abstützt und im Anhängebetrieb von einem nicht näher dargestellten Ackerschlepper gezogen wird. Heckseitig ist das von den Schleuderscheiben 4 gebildete Zentrifugalstreuwerk 5 unterhalb der Auslauföffnungen 6 des Vorratsbehälters 1 und des entgegen der Fahrtrichtung 7 fördernden Förderorgans 8 angeordnet. Unterhalb der Schleuderscheiben 4 ist das Getriebegehäuse 9 des Antriebsgetriebes 10 der Schleuderscheiben 4 angeordnet, wobei die Schleuderscheiben 4 auf den Antriebswellen 11 des Antriebsgetriebes 10 leicht lösbar befestigt sind. Die Schleuderscheiben 4 sind nach Lösen der Kupplungsvorrichtung 12 einfach von den Antriebswellen 11 abnehmbar, so daß sie gegen andersartig ausgebildete Schleuderscheiben ausgewechselt werden können. Oberhalb der Schleuderscheiben 4 sind die einstellbaren Leitorgane 13 verstellbar an dem Rahmen 14 befestigt. Die Schleuderscheiben 4 werden von der Zapfwelle des den Großflächendüngerstreuer ziehenden Ackerschleppers in bekannter und daher nicht näher dargestellter Weise über eine Gelenkwelle angetrieben.

Die Schleuderscheiben 4, das Antriebsgetriebe 10 und die Leitorgane 13 sind an dem gemeinsamen Rahmen 14 als eine Einheit mit dem Maschinenrahmen 15 des Großflächendüngerstreuers angeordnet.

Die sich im Vorratsbehälter 1 befindlichen Düngemittel werden über das Förderorgan 8 durch den Schieber 16 durch Verkleinern und Vergrößern der Auslauföffnung 6 des Vorratsbehälters 1, in genau einstellbaren Mengen den verstellbaren Leitorganen 13 zugeführt, von woaus die Düngemittel auf den Aufgabepunkt 17 der Schleuderscheiben 4 gelangen und nun von den auf den Schleuderscheiben 4 angeordneten Wurfschaufeln 18 von diesen erfaßt und in Breitverteilung auf der Bodenoberfläche 3 verteilt werden.

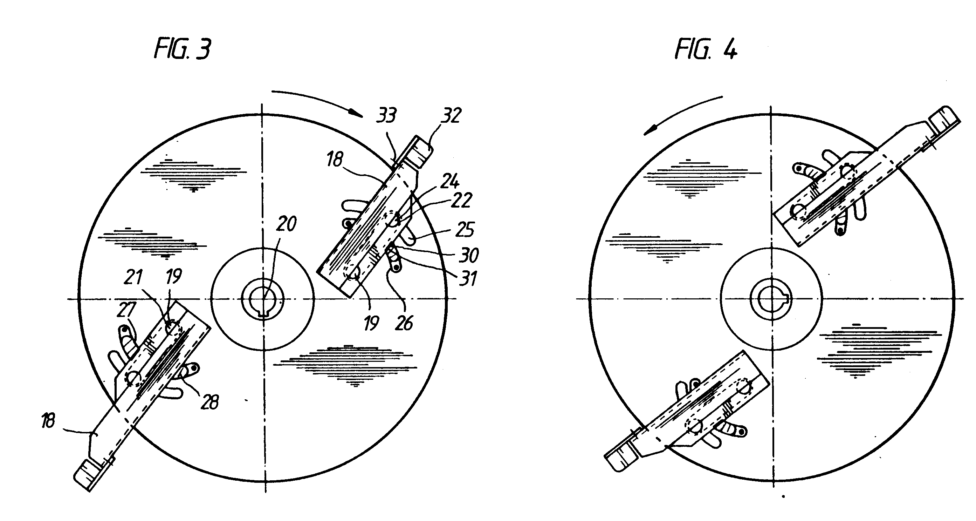

Die Fig. 3 und 4 zeigen die nebeneinander angeordneten Schleuderscheiben 4 mit den jeweils auf den Schleuderscheiben 4 angeordneten Wurfschaufeln 18. Bei diesen Wurfschaufeln 18 handelt es sich um kurze Wurfschaufeln, die für das sog. "Normalstreuen" für die kleineren Wurfweiten vorgesehen sind. Diese Wurfschaufeln 18 sind jeweils winkelverschwenkbar auf den Schleuderscheiben 4 angeordnet. Hierbei befindet sich die Schwenkachse 19 einer jeden Wurfschaufel 11 in der der Rotationsachse 20 der jeweiligen Schleuderscheibe 4 zugewandten Hälfte. Die Schwenkachse 19 weist den Drehbolzen 21 auf, der als Reibverschlußverbindung ausgebildet ist. Der Festsetzmechanismus 22 der winkelverschwenkbaren Wurfschaufeln 18 befindet sich in der dem äußeren Rand 23 der Schleuderscheibe 10 zugewandten Hälft der Wurfschaufel 18. Dieser Festsetzmechanismus 22 ist als lösbarer Schraubbolzen 24 ausgebildet und wirkt mit dem sich in der Schleuderscheibe 4 befindlichen Langloch 25 zusammen. Parallel zu dem Langloch 25 ist die Aussparung 26 in die Schleuderscheibe 4 eingestanzt. In diese Aussparung 26 ist die Einstellskala 27 mit ihren Markierungspunkten 28 von unten in die Schleuderscheibe 4 eingesetzt, wobei Skala 27 beispielsweise aus Kunststoff hergestellt ist.

Das Anzeigenfeld 29 der Einstellskala 27 weist die gleiche Kontur auf, wie die Aussparung 26 der Schleuderscheibe 4. Damit die Düngemittelpartikel gleichmäßig über den Arbeitsbereich des Großflächendüngerstreuers verteilt werden, sind die Wurfschaufeln 18 dieser Schleuderscheiben 4 unterschiedlich lang ausgebildet. Die Anordnung unterschiedlich langer Wurfschaufeln 18 auf den Schleuderscheiben 4 gewährleistet, daß die Düngemittelpartikel gleichmäßig über die gesamte Arbeitsbreite verteilt werden, da die langen Wurfschaufeln 18 die Düngemittelpartikel mehr in den Außenbereich der Arbeitsbreite und die kurzen Schaufeln 18 die Düngemittelpartikel in den inneren Bereich der Arbeitsbreite abwerfen. Bei den Schleuderscheiben 4 gemäß den Fig. 3 und 4 lassen sich die Anstellwinkel der Wurfschaufeln 18 unterschiedlich einstellen, wobei die Wurfschaufeln 18 um den Drehpunkt 19 im Bereich des Langloches 25 verschwenkt werden. Um nun bei einer ganz bestimmten Düngersorte, unter Berücksichtigung der speziellen Streuguteigenschaften des auszustreuenden Düngers eine ganz bestimmte Arbeitsbreite zu erzielen, ist es erforderlich, daß die Wurfschaufeln 18 zur Erzeugung eines optimalen Streubildes unterschiedlich angestellt werden. Aus diesem Grunde wird die Skalen 27 der einzelnen Wurfschaufeln 18 mit unterschiedlichen Markierungspunkten 28 ausgebildet, so daß die einzelnen Markierungspunkte 28 der Einstellskalen 27 jeweils nur einmal vorhanden sind. Hierdurch sind gewährleistet, daß die Wurfschaufeln 18 unverwechselbar einstellbar sind, d.h., es ist nicht möglich, die aus der Streutabelle entnommenen Einstelldaten, die einer bestimmten Wurfschaufel 18 zugeordnet werden, für die Wurfschaufeln 18 zu vertauschen.

Soll nun beispielsweise eine ganz bestimmte Düngersorte über einen Streubereich von beispielsweise 24 m verteilt werden, schlägt der Benutzer des Großflächendüngerstreuers die zu dem Streuer gehörige Streutabelle auf und ermittelt die Einstelldaten für die winkelverschwenkbaren Wurfschaufeln 18 der als Normalstreuscheibe 4 ausgebildeten Schleuderscheibe für die auszustreuenden Düngemittelsorten bei der gewünschten Streubreite. Werden hierfür nun der Streutabelle beispielsweise die Daten

     "G" und "Q"

entnommen, werden die Wurfschaufeln 18 der Schleuderscheiben 4 nach Lösen der jeweiligen Festsetzmechanismen 22 derart verschwenkt, bis daß diese entsprechenden Markierungspunkte des Anzeigenfeldes 29 an der als Zeiger 30 ausgebildeten Kante 31 der jeweiligen Wurfschaufel 18 ablesbar sind. Dadurch, daß die Anzeigenfelder 29 der den beiden Wurfschaufel 18 zugeordneten Skalen 27 unterschiedlich ausgebildet sind, ist eine unverwechselbare Einstellung der winkelverschwenkbaren Wurfschaufeln 18 auf den Schleuderscheiben 4 gewährleistet. Streufehler durch unsachgemäße Einstellung der Wurfschaufeln 18 sind somit völlig ausgeschlossen.

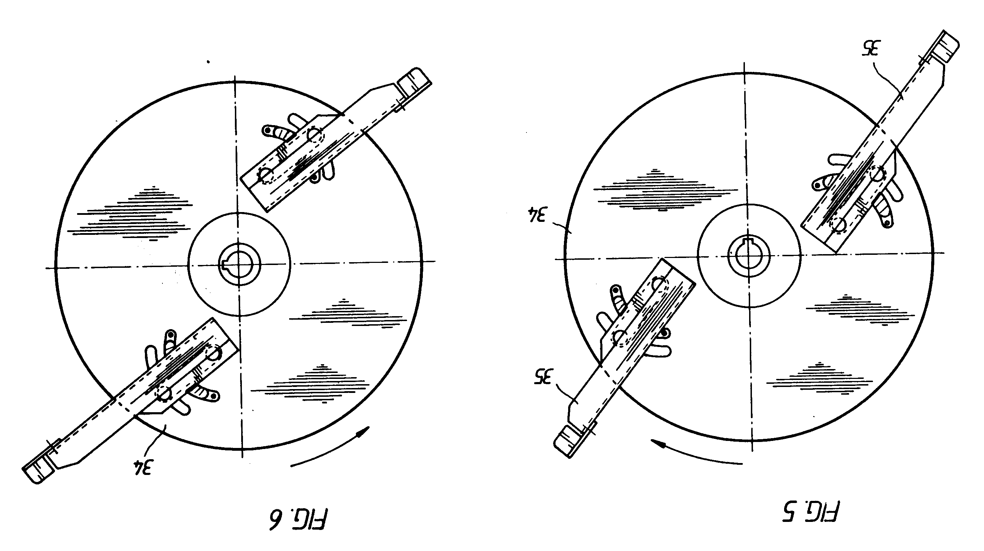

Damit die Streuscheiben 4 auch für die sog. "Spätdüngung" eingesetzt werden können, weisen die Wurfschaufeln 18 jeweils an ihren äußeren Enden als sog. Schwenkschaufeln ausgebildete Schwenkflügel 32 auf, welche um die Schwenkachse 33 in aufrechter Ebene schwenkbar sind. Diese Schwenkflügel 32 sind jeweils in zwei verschiedene Positionen arretierbar, so daß sich die Flugkurve der von den Wurfschaufeln 18 abgeschleuderten Düngemittelpartikel verändern läßt, so daß sich Pflanzen in unterschiedlichen Wachstumsstadien düngen lassen. Bei den Schleuderscheiben 34 gemäß den Fig. 5 und 6 handelt es sich jeweils um die rechte und linke Schleuderscheibe 34, die gegen die Schleuderscheiben 4 gemäß den Fig. 3 und 4 ausgetauscht werden können. Bei diesen Schleuderscheiben 34 des Düngerstreuers, handelt es sich um Schleuderscheiben für das sog. "Breitstreuen" für die größeren Arbeitsbreiten. Diese Schleuderscheiben 34 unterscheiden sich nur durch die längeren Wurfschaufeln 35, die die Düngemittelpartikel über einen weiteren Streubereich abschleudern, von den Normalstreuscheiben 4 gemäß den Fig. 3 und 4. Die Anzeigenfelder 29 der Einstellskalen 27 dieser Breitstreuscheiben 34 weisen ebenfalls für die beiden ungleich langen Wurfschaufeln 35 ungleiche Markierungspunkte 28 auf, damit auch hier ein unverwechselbares Einstellen der winkelverschwenkbaren Wurfschaufeln 35 gewährleistet ist.

**Patentansprüche**

1.   Großflächendüngerstreuer mit einem langgestreckten Vorratsbehälter (1), einem eigenen Fahrwerk und einem in dem unteren Bereich des Vorratsbehälters (1) angeordneten Förderorgan (8), welches die Düngemittel zu einem an dem hinteren Ende des Vorratsbehälters und des Förderorgans angeordneten Zentrifugalstreuwerkes mit zumindest zwei um aufrechte Achsen rotierend angetriebenen Schleuderscheiben (4,34) mit Wurfschaufeln in einstellbaren Mengen fördert und von welchem die Düngemittel in Breitverteilung auf der Bodenoberfläche verteilt wird, wobei die Düngemittel über zwischen dem Förderorgan und den Schleuderscheiben angeordnete Zulaufrutschen den Schleuderscheiben zugeführt werden, dadurch gekennzeichnet, daß die Wurfschaufeln (18,35) auf den Schleuderscheiben (4,34) in Scheibenebene winkelverschwenkbar angeordnet sind, und daß die Wurfschaufeln (18,35) mit unterschiedlichen Winkeln (4,34) zur Radialen mittels im Bereich der Wurfschaufeln (18,35) angeordneter Skalen (27) einstellbar sind, daß zumindest zwei Wurfschaufeln (18,34) auf jeder Schleuderscheibe (4,34) angeordnet sind, daß sich für jede Wurfschaufel (18,35) zur Einstellung des horizontalen Abwurfwinkels Markierungselemente (28) auf der Schleuderscheibe (4,34) befinden, welche unterschiedlich ausgebildet und/oder unterschiedlich bezeichnet sind und zwar derart, daß die Markierungselemente (28) eindeutig und unverwechselbar jeweils einer Wurfschaufel (18,35) zugeordnet sind.

2. Großflächendüngerstreuer nach Anspruch 1, dadurch gekennzeichnet, daß die auf jeder Schleuderscheibe (4,34) angeordneten Wurfschaufeln (18,35) eine unterschiedliche Länge aufweisen.

3. Großflächendüngerstreuer nach Anspruch 1 und/oder 2, dadurch gekennzeichnet, daß die Abstreukanten der Wurfschaufeln (18,35) einen unterschiedlichen Abstand zur Drehachse (20) der Schleuderscheiben (4,34) aufweisen.

4. Großflächendüngerstreuer nach einem oder mehrerer der vorstehenden Ansprüche, dadurch gekennzeichnet, daß auf jeder Schleuderscheibe (4,34) zumindest zwei Wurfschaufeln (18,35) angeordnet sind, welche mit unterschiedlichem Winkel zur Radialen eingestellt oder einstellbar sind.

5. Großflächenstreuer nach einem oder mehreren der vorstehenden Ansprüche, dadurch gekennzeichnet, daß auf den Schleuderscheiben (4,34) eine Anzahl von Arretierungs- und/oder Einstellmarkierungen (28) für die Wurfschaufeln (18,35) vorgesehen sind.

6. Großflächendüngerstreuer nach einem oder mehreren der vorstehenden Ansprüche dadurch gekennzeichnet, daß für jede Wurfschaufel (18,35) eigene Arretierungs- und/oder Einstellmarkierungen (28) vorgesehen sind.

7. Großflächendüngerstreuer nach einem oder mehreren der vorstehenden Ansprüche, dadurch gekennzeichnet, daß die Wurfschaufeln (18,35) an der einen Seiten durch einen Drehbolzen (21) und an der anderen Seite durch einen Schraubbolzen (21) gehalten sind, daß der Drehbolzen als Reibschlußverbindung ausgebildet ist, daß der Schraubbolzen (24) sich in einem Langloch (25) bewegt, welches in der Schleuderscheibe (4,34) angeordnet ist.

8. Großflächendüngerstreuer nach einem oder mehreren der vorstehenden Ansprüche, dadurch gekennzeichnet, daß an den Enden der Wurfschaufeln (18,35) um waagerechte Achsen schwenkbare Schwenkflügel (32), welche in zwei durch feste Kennzeichnungen und/oder Anschläge fixierbare Stellungen - zum Normaldüngen und zum Spätdüngen - gebracht werden können, angebracht sind.

## Claims

1. Large-area fertilizer spreader, including an elongate hopper (1), its own travelling means and a conveyor arrangement (8), which is disposed in the lower region of the hopper (1) and conveys the fertilizers, in adjustable quantities, to a centrifugal spreading mechanism, which is disposed at the rear end of the hopper and the conveyor arrangement and has at least two centrifugal discs (4, 34), which are driven so as to rotate around upwardly extending axes and are provided with throwing vanes, and by means of which centrifugal spreading mechanism the fertilizers are widely distributed over the surface of the ground, the fertilizers being supplied to the centrifugal discs via supply chutes, which are disposed between the conveyor arrangement and the centrifugal discs, characterised in that the throwing vanes (18, 35) are disposed on the centrifugal discs (4, 34) so as to be angularly pivotable in the plane of the discs, and in that the throwing vanes (18, 35) are adjustable at different angles (4, 34) relative to the radial with the aid of scales (27), which are disposed in the region of the throwing vanes (18, 35), in that at least two throwing vanes (18, 34) are disposed on each centrifugal disc (4, 34), in that markings (28) are situated on the centrifugal disc (4, 34) for each throwing vane (18, 35) in order to enable adjustment of the horizontal angle of discharge, which markings have different configurations and/or different designations, such that the markings (28) are clearly and non-confusibly associated with each respective throwing vane (18, 35).

2. Large-area fertilizer spreader according to claim 1, characterised in that the throwing vanes (18, 35), which are disposed on each centrifugal disc (4, 34), have different lengths.

3. Large-area fertilizer spreader according to claim 1 and/or 2, characterised in that the spacings of the dispersing edges of the throwing vanes (18, 35) from the rotary axis (20) of the centrifugal discs (4, 34) are variable.

4. Large-area fertilizer spreader according to one or more of the preceding claims, characterised in that at least two throwing vanes (18, 35) are disposed on each centrifugal disc (4, 34), which vanes are set, or are settable, at variable angles relative to the radial.

5. Large-area fertilizer spreader according to one or more of the preceding claims, characterised in that a number of locking and/or setting markings (28) are provided for the throwing vanes (18, 35) on the centrifugal discs (4, 34).

6. Large-area fertilizer spreader according to one or more of the preceding claims, characterised in that each throwing vane (18, 35) is provided with its own locking and/or setting markings (28).

7. Large-area fertilizer spreader according to one or more of the preceding claims, characterised in that the throwing vanes (18, 35) are retained at one end by a pivot pin (21) and at the other end by a screw bolt (24), in that the pivot pin is a friction-locking connection, and in that the screw bolt (24) moves in a slot (25), which is provided in the centrifugal disc (4, 34).

8. Large-area fertilizer spreader according to one or more of the preceding claims, characterised in that pivot vanes (32) are mounted at the ends of the throwing vanes (18, 35), the pivot vanes being pivotable about horizontal axes and being able to be brought into two positions - for normal fertilizing and for late fertilizing - which positions are securable by means of fixed indications and/or stop members.

**Revendications**

1. Epandeur centrifuge de grande capacité pour un réservoir d'alimentation (1), allongé, comportant un châssis de roulement indépendant et un organe de transfert (8) disposé dans la partie inférieure du réservoir d'alimentation (1), cet organe de transfert conduisant les particules d'engrais à un mécanisme d'épandage centrifuge prévu à l'extrémité arrière du réservoir d'alimentation et de l'organe de transfert, ce mécanisme se composant d'au moins deux disques d'épandage (4, 34) entraînés autour d'axes rotatifs verticaux, des disques, équipés de palettes d'éjec-tion, recevant l'engrais en quantité réglable, pour distribuer l'engrais en épandage large à la surface du sol, l'engrais étant fourni aux disques d'épandage par des glissières d'alimentation prévues entre l'organe de transfert et les disques, épandeur caractérisé en ce que les palettes d'éjection (18, 35) sont montées pivotantes sur les disques d'épandage (4, 34), dans le plan des disques et les palettes (18, 35) se règlent suivant des angles différents (4, 34) par rapport au rayon suivant des échelles (27) prévues dans la zone des palettes (18, 35) et en ce que chaque disque d'épandage (4, 34) comporte au moins deux palettes éjection (18, 35), des repères (28) étant prévus sur les disques d'épandage (4, 34) associés à chaque palette (18, 35) pour régler l'angle d'éjection horizontal, ces repères étant réalisés différemment et/ou repérés différemment et cela pour que les repères (28) soient associés sans équivoque et de manière non interchangeable à chaque palette d'éjection (18, 35).

2. Epandeur centrifuge de grande capacité selon la revendication 1, caractérisé en ce que les palettes d'éjection (18, 35) de chaque disque d'épandage (4, 34) ont une longueur différente.

3. Epandeur centrifuge de grande capacité selon la revendication 1 et/ou 2, caractérisé en ce que les arêtes de sortie des palettes d'éjection (18, 35) sont à une distance différente de l'axe de rotation (20) des disques d'épandage (4, 34).

4. Epandeur centrifuge de grande capacité selon l'une ou plusieurs des revendications précédentes caractérisé en ce que chaque disque d'épandage (4, 34) comporte au moins deux palettes d'éjection (18, 35) qui sont réglées ou se règlent suivant des angles différents par rapport aux rayons.

5. Epandeur centrifuge de grande capacité selon l'une ou plusieurs des revendications précédentes, caractérisé en ce que les disques d'épandage (4, 34) comportent un certain nombre d'éléments de blocage et/ou de repères de marquage (28) pour les palettes d'éjection (18, 35).

6. Epandeur centrifuge de grande capacité selon l'une ou plusieurs des revendications précédentes caractérisé en ce qu'à chaque palette d'éjection (18, 35) est associé un repère de blocage et/ou de réglage (28) distinct.

7. Epandeur centrifuge de grande capacité selon l'une ou plusieurs des revendications précédentes, caractérisé en ce que les palettes d'éjection (18, 35) sont maintenues à une extrémité par un tourillon d'axe (28) et à l'autre extrémité par un boulon (21), le tourillon constituant une liaison de frottement et le boulon (24) étant mobile dans un trou oblong (25) prévu dans le disque d'épandage (4, 34).

8. Epandeur centrifuge de grande capacité selon l'une ou plusieurs des revendications précédentes, caractérisé par des extrémités pivotantes (32) mobiles autour d'un axe horizontal à l'extrémité de la palette d'éjection (18, 35), ces extrémités mobiles pouvant se fixer dans deux positions définies par des repères fixes et/ou des butées, pour l'épandage normal et l'épandage de couverture.

FIG. 1

FIG. 2

FIG. 3

FIG. 4

FIG. 5

FIG. 6

FIG. 7

FIG. 8